# EUROPEAN PATENT APPLICATION

(11) **EP 4 397 827 A1**
(43) Date of publication of application: **10.07.2024**
(21) Application number: 23150690.8
(22) Date of filing: 09.01.2023
(51) Int. Cl.: E05B 9/00, B60L 53/16, H01R 13/639, B60L 53/18

(54) **SECURITY SYSTEM FOR VEHICLE CONNECTOR PORT**

(71) Applicant: VOLVO TRUCK CORPORATION, 405 08 Göteborg (SE)
(72) Inventor: ZHONG, Yuan, 182 30 Danderyd (SE); OLAUSSON, Lennart, 423 34 Torslanda (SE); GOYET, Denis, 69140 Rillieux la Pape (FR); BENFIELD, Ralph, Greensboro, 27409 (US)
(74) Representative: Valea AB

(57) **Abstract**

A security system may be provided. The security system may have a casing and a latch. The casing may be used to engage at least one portion of a vehicle connector port. The latch may be movably and undetachably mounted to the casing and may be used to selectively move relative to the casing between a latched position to inhibit removal of the vehicle connector port and an unlatched position to allow removal of the vehicle connector port.

## Description

### TECHNICAL FIELD

The present disclosure relates generally to a security system. In particular aspects, the present disclosure relates to a security system for a vehicle connector port. The present disclosure can be applied in heavy-duty vehicles, such as trucks, buses, and construction equipment. Although the present disclosure may be described with respect to a particular vehicle, the present disclosure is not restricted to any particular vehicle.

### BACKGROUND

A conventional voltage protection used for a vehicle connector port of a vehicle may be manufactured from bulk plastic piece or injection molding. Such manufacturing processes may produce excessive wasted materials, require many machining steps, include high manufacturing parts or costs (e.g., long shackle padlock), and/or require expensive upfront investments.

### SUMMARY

According to an aspect of the disclosure, a security system may comprise a casing which may be configured to engage at least one portion of a vehicle connector port of a vehicle and a latch which may be movably and undetachably mounted to the casing and may be configured to selectively move relative to the casing between a latched position to inhibit removal of the vehicle connector port and an unlatched position to allow removal of the vehicle connector port. The aspect of the disclosure may seek to prevent unauthorized people from accessing the vehicle connector port during maintenance or repair of the vehicle and to facilitate maintenance while avoiding utilizing any long shackle padlock. A technical benefit may include achieving voltage protection of the vehicle connector port of the vehicle and improving efficiency of tool utilization and maintenance.

In some examples, in the security system, access to the vehicle connector port may be inhibited by engagement of the vehicle connector port with the casing. A technical benefit may include achieving voltage protection of the vehicle connector port of the vehicle.

In some examples, the security system further may comprise a lock that may be removably engaged with the latch to selectively lock the latch in the latched position. A technical benefit may include improving efficiency of tool utilization and maintenance.

In some examples, in the security system, the latch may comprise an eyelet, and the lock may be removably engaged with the eyelet. A technical benefit may include improving efficiency of tool utilization and maintenance.

In some examples, in the security system, the latch may comprise an elongated intermediate rod, a first terminal head at a first end of the elongated intermediate rod and a second terminal head at a second end of the elongate terminal rod, the casing may comprise a first lateral side wall and a second lateral side wall opposite the first lateral side wall, the first terminal head may be configured to move through the first lateral side wall, and the elongated intermediate rod may be configured to move through the first lateral side wall and the second lateral side wall. A technical benefit may include improving efficiency of tool utilization and maintenance.

In some examples, in the security system, in the latched position the first terminal head may be outside of the first lateral side wall, and in the unlatched position the first terminal head may be inside of the first lateral side wall. A technical benefit may include improving efficiency of tool utilization and maintenance.

In some examples, in the security system, the casing may comprise an interior, in the latched position the first terminal head may be positioned outside of the interior, and in the unlatched position the first terminal head may be positioned inside of the interior. A technical benefit may include improving efficiency of tool utilization and maintenance.

In some examples, in the security system, the first terminal head, the elongated intermediate rod and the second terminal head may be axially aligned. A technical benefit may include improving efficiency of tool utilization and maintenance.

In some examples, in the security system, the casing further may comprise a first through hole defined in the first lateral side wall and a second through hole defined in the second lateral side wall, the first terminal head may be configured to movably traverse through the first through hole, and the first terminal head and the second terminal head may be configured to not movably traverse through the second through hole. A technical benefit may include improving efficiency of tool utilization and maintenance.

In some examples, in the security system, a diameter of the first terminal head may be smaller than a diameter of the first through hole and may be larger than a diameter of the second through hole, a diameter of the elongated intermediate rod may be smaller than the diameter of the first through hole and the diameter of the second through hole, and a diameter of the second terminal head may be larger than the diameter of the second through hole. A technical benefit may include improving efficiency of tool utilization and maintenance.

In some examples, in the security system, the casing further may comprise a recess formed in the second through hole, and the recess may be configured to allow the first terminal head to lay flush against the second lateral side wall. A technical benefit may include improving efficiency of tool utilization and maintenance.

In some examples, in the security system, the casing may comprise an interior, and the interior may be configured to receive the at least one portion of the vehicle connector port. A technical benefit may include improving efficiency of tool utilization and maintenance.

In some examples, in the security system, the casing further may comprise an opening that may be in spatial communication with the interior, and the opening may be configured to allow the vehicle connector port to move into or out of the interior. A technical benefit may include improving efficiency of tool utilization and maintenance.

In some examples, in the security system, in the latched position the latch may extend across the opening. A technical benefit may include improving efficiency of tool utilization and maintenance.

In some examples, in the security system, the casing further may comprise a first lateral side wall, a second lateral side wall and a third lateral side wall, the third lateral side wall may be formed between the first lateral side wall and the second lateral side wall, and the interior may be at least partially defined by the first lateral side wall, the second lateral side wall and the third lateral side wall. A technical benefit may include improving efficiency of tool utilization and maintenance.

In some examples, in the security system, the casing further may comprise at least one socket within the interior and may be configured to receive and secure the at least one portion of the vehicle connector port. A technical benefit may include improving efficiency of tool utilization and maintenance.

In some examples, in the security system, the casing may comprise a lateral side wall and a plurality of patterned apertures defined therein. A technical benefit may include rendering a casing light weighted so as to improve efficiency of tool utilization and maintenance.

In some examples, in the security system, the casing and the latch may be manufactured by a three-dimensional printing process. A technical benefit may include reducing material waste during the manufacturing process while improving efficiency of material utilization to avoid from some environmental problems.

In some examples, in the security system, the latch may have a key shape or a barbell shape. A technical benefit may include improving efficiency of tool utilization and maintenance.

In some examples, in the security system, the casing may comprise a through hole, the latch may movably traverses through the through hole, and the through hole may have a keyhole shape matching with the key shape or may have a circle shape matching with the barbell shape. A technical benefit may include improving efficiency of tool utilization and maintenance.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**Figure 1** is an exemplary schematic diagram illustrating a security system with a casing, a latch and a lock according to one example.
**Figure 2** is an exemplary schematic diagram illustrating the security system in which the lock may be engaged with the latch while the latch may be in a latched position according to one example.
**Figure 3** is an exemplary schematic diagram illustrating the security system (100) in which the lock may be disengaged from the latch while the latch may be in an unlatched position according to one example.
**Figure 4** is an exemplary schematic diagram illustrating the security system for a vehicle connector port in which the casing may be engaged with at least one portion of the vehicle connector port while the latch may be in the latched position to inhibit removal of the vehicle connector port from the casing according to one example.
**Figure 5** is an exemplary schematic diagram illustrating the security system for the vehicle connector port in which the casing may be still engaged with at least one portion of the vehicle connector port while the latch may move to the unlatched position to allow removal of the vehicle connector port from the casing according to one example.
**Figure 6** is an exemplary schematic diagram illustrating the security system for the vehicle connector port where the vehicle connector port may be removed out of the casing when the latch may be in the unlatched position.
**Figure 7** is a cross-sectional view illustrating the security system in which the latch may be in the unlatched latched position according to one example.
**Figure 8** is a partially enlarged view of **Figure 7** illustrating that the latch may be in the unlatched position according to one example.
**Figures 9A-9C** are exemplary schematic diagrams illustrating portions of the security system in which the latch may be in the latched position according to one example.
**Figure 10** is a cross-sectional view illustrating that the latch may have a key shape while the first through hole may have a keyhole shape.
**Figure 11** is a cross-sectional view illustrating that the latch may have a barbell shape while the first through hole may have a circle shape.

### DETAILED DESCRIPTION

Aspects set forth below represent the necessary information to enable those skilled in the art to practice the disclosure.

By using a security system for a vehicle connector port, unauthorized people may be prevented from accessing a vehicle connector port during maintenance or repair of a vehicle, maintenance of a vehicle may be facilitated, utilization of any long shackle padlock may be avoided, efficiency of tool utilization and maintenance may be improved, material waste may be reduced during a manufacturing process, and efficiency of material utilization may be improved.

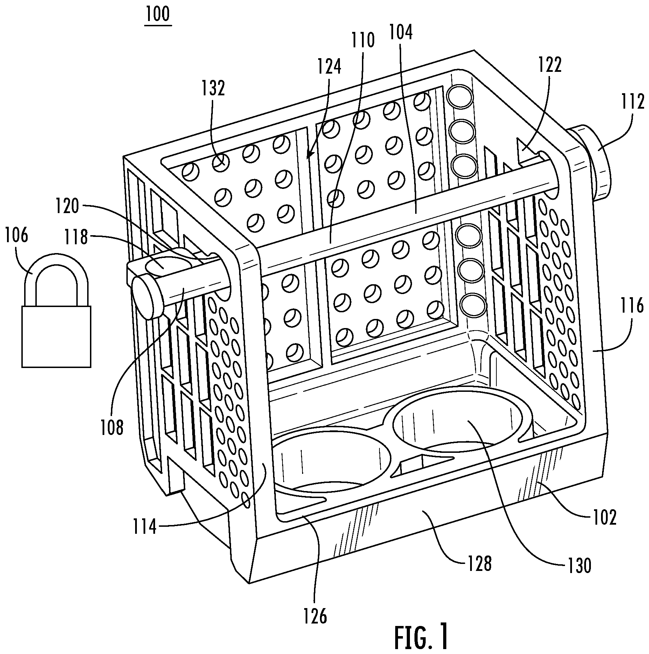

**Figure 1** is an exemplary schematic diagram illustrating a security system (100) according to one example. In particular, as shown in **Figure 1****,** the security system (100) may comprise a casing (102), a latch (104) and a lock (106). The casing (102) and the latch (104) may be manufactured by a three-dimensional printing process, while the lock (106) may be a separate short padlock or a separate normal padlock. A padlock has a shackle and a body, and a clearance height of the shackle is measured by measuring from an end of the shackle to a beginning of the body. For instance, a short padlock or a normal padlock may have a shackle with a clearance height of less than about 3.15 inches (80 millimeters). Accordingly, material waste may be reduced during the manufacturing process, and efficiency of material utilization may be improved to avoid from some environmental problems, while efficiency of tool utilization may be improved. For example, the casing (102) and the latch (104) may be manufactured in a one-step 3D printing selective laser sintering process, so that there may be assemble-free after manufacturing. The latch (104) may be mounted to the casing (102), while the lock (106) may be configured to be engaged with or disengaged from the latch (104).

Also referring to **Figure 1****,** specifically, the casing (102) may comprise a lateral side wall (114, 116, 128), an interior (124), an opening (126), a through hole (120, 122), at least one socket (130) and a plurality of patterned apertures (132). The interior (124) may be at least partially defined by the lateral side wall (114, 116, 128), while the opening (126) may be delineated by a periphery of the lateral side wall (114, 116, 128) and may be in spatial communication with the interior (124). The through hole (120, 122) may be defined in and may traverse through at least a part of the lateral side wall (114, 116, 128) and also may be in spatial communication with the interior (124). The at least one socket (130) may be located within the interior (124) and may be disposed on at least a part of the lateral side wall (114, 116, 128). The plurality of patterned apertures (132) may be defined in and may traverse through at least a part of the lateral side wall (114, 116, 128) and also may be in spatial communication with the interior (124). Particularly, the lateral side wall (114, 116, 128) may comprise a first lateral side wall (114), a second lateral side wall (116) and a third lateral side wall (128). The first lateral side wall (114) and the second lateral side wall (116) may be located opposite to each other, while the third lateral side wall (128) may be formed between the first lateral side wall (114) and the second lateral side wall (116). Accordingly, the interior (124) may be at least partially defined by the first lateral side wall (114), the second lateral side wall (116) and the third lateral side wall (128), and the opening (126) may be delineated by each periphery of the first lateral side wall (114), the second lateral side wall (116) and the third lateral side wall (128). Particularly, the through hole (120, 122) may comprise a first through hole (120) and a second through hole (122). The first through hole (120) may be defined in and may traverse through the first lateral side wall (114) and also may be in spatial communication with the interior (124), and the second through hole (122) may be defined in and may traverse through the second lateral side wall (116) and also may be in spatial communication with the interior (124). The first through hole (120) and the second through hole (122) may be aligned with each other. The at least one socket (130) may be disposed on the third lateral side wall (128), for instance, on a bottom portion of the third lateral side wall (128). The plurality of patterned apertures (132) may be defined in and may traverse through the first lateral side wall (114) and the second lateral side wall (116) and perhaps further the third lateral side wall (128). Accordingly, the whole weight of casing (102) may be reduced so as to improve efficiency of tool utilization and maintenance while improving efficiency of material utilization.

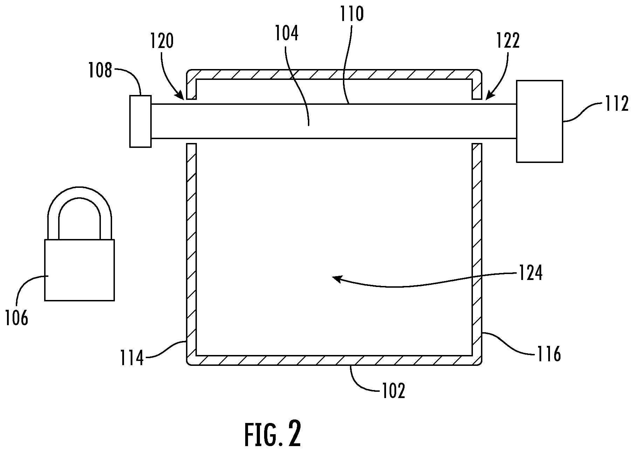

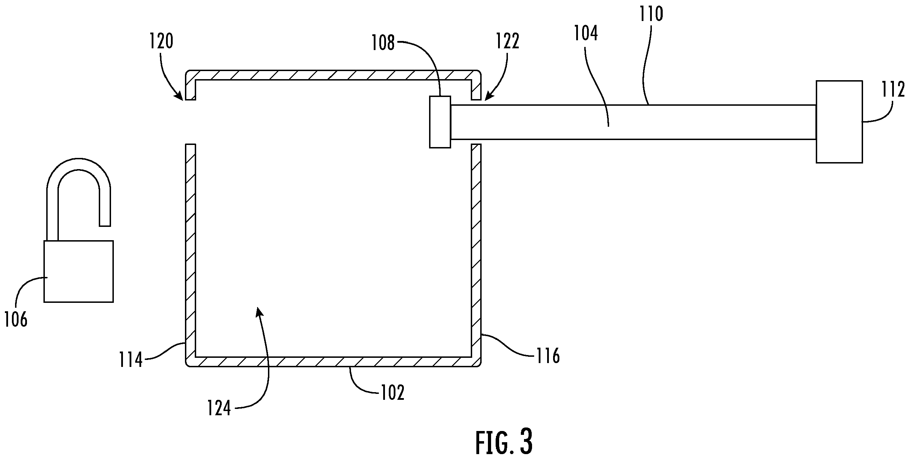

**Figure** 2 is an exemplary schematic diagram illustrating the security system (100) in which the lock (106) may be engaged with the latch (104) while the latch (104) may be in a latched position according to one example. **Figure** 3 is an exemplary schematic diagram illustrating the security system (100) in which the lock (106) may be disengaged from the latch (104) while the latch (104) may be in an unlatched position according to one example. The latch (104) and the lock (106) may be together or jointly used to achieve the function of any long shackle padlock, such that efficiency of tool utilization may be improved. Reference now is made to **Figure 1****,** **Figure 2** and **Figure 3****.** The latch (104) may be movably and undetachably mounted to the casing (102) by that a portion of the latch (104) may be configured to movably penetrate at least a part of the lateral side wall (114, 116, 128) while the portion and another portion of the latch (104) may be configured to not movably penetrate at least another part of the lateral side wall (114, 116, 128). Accordingly, the undetachably latch (104) on the casing (102) may ensure that a normal padlock instead of a long shackle padlock may be used during the operation, and may ensure that the latch (104) may not be able to separate from the casing (102) so as to facilitate maintenance. For instance, a long shackle padlock may have a shackle with a clearance height of more than 3.15 inches (80 millimeters). Additionally, the latch (104) may be configured to selectively move relative to the casing (102) between the latched position as shown in **Figure 2** and the unlatched position as shown in **Figure 3****.** Specifically, the latch (104) may comprise a first terminal head (108), an elongated intermediate rod (110), a second terminal head (112) and an eyelet (118). Preferably, the first terminal head (108), the elongated intermediate rod (110) and the second terminal head (112) may be integrally formed with each other, for instance, via a three-dimensional printing process. Alternatively, the first terminal head (108), the elongated intermediate rod (110) and the second terminal head (112) may be separate parts that are assembled. The elongated intermediate rod (110) may comprise a first end and a second end opposite to each other. The first terminal head (108) may be located at the first end of the elongated intermediate rod (110) while the second terminal head (112) may be located at the second end of the elongate terminal rod (110). The elongated intermediate rod (110) may be formed between the first terminal head (108) and the second terminal head (112). The first terminal head (108), the elongated intermediate rod (110) and the second terminal head (112) may be axially aligned. Particularly, as shown in **Figure 2** and **Figure 3****,** the first terminal head (108) may be configured to move through or movably penetrating the first through hole (120) in the first lateral side wall (114), the elongated intermediate rod (110) may be configured to move through or movably penetrating the first through hole (120) in the first lateral side wall (114) and the second through hole (122) in the second lateral side wall (116), and the first terminal head (108) and the second terminal head (112) may be configured to not move through or movably penetrating the second through hole (122) in the second lateral side wall (116). As illustrated in **Figure 2****,** when the lock (106) may be engaged with the latch (104) such that the latch (104) may be restrained in the latched position via the lock (106) together with the second terminal head (112), the latch (104) may extend across the opening (126) (as shown in **Figure 1**), the first terminal head (108) may be located outside of the first lateral side wall (114), i.e., the first terminal head (108) may be positioned outside of the interior (124), and the second terminal head (112) may be located outside of the second lateral side wall (116), i.e., the second terminal head (112) also may be positioned outside of the interior (124). As illustrated in **Figure 3****,** when the lock (106) may be disengaged from the latch (104) such that the latch (104) may move to and be restrained in the unlatched position via the first terminal head (108) and the second terminal head (112), the first terminal head (108) may be located inside of the first lateral side wall (114), i.e., the first terminal head (108) may be positioned inside of the interior (124), and the second terminal head (112) may be still located outside of the second lateral side wall (116), i.e., the second terminal head (112) may be still positioned outside of the interior (124). In order to achieve the above-mentioned moving mechanism of the latch (104) relative to the casing (102), a size of the lock (106) may be larger than a diameter of the first through hole (120), a diameter of the first terminal head (108) may be smaller than the diameter of the first through hole (120) and may be larger than a diameter of the second through hole (122), a diameter of the elongated intermediate rod (110) may be smaller than the diameter of the first through hole (120) and the diameter of the second through hole (122), and a diameter of the second terminal head (112) may be larger than the diameter of the second through hole (122). Additionally, the eyelet (118) may be formed on the first terminal head (108), such that the lock (106) may be removably engaged with the eyelet (118) of the latch (104) to selectively lock the latch (104) in the latched position.

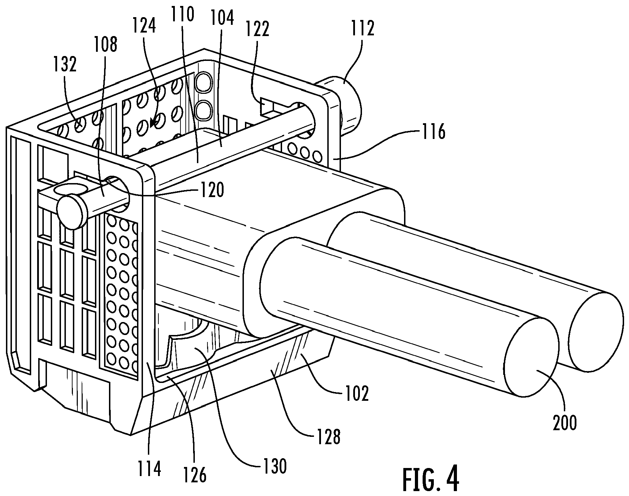

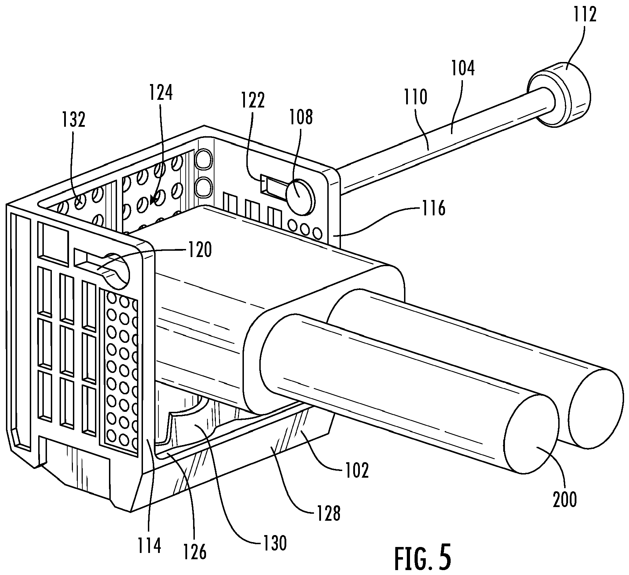

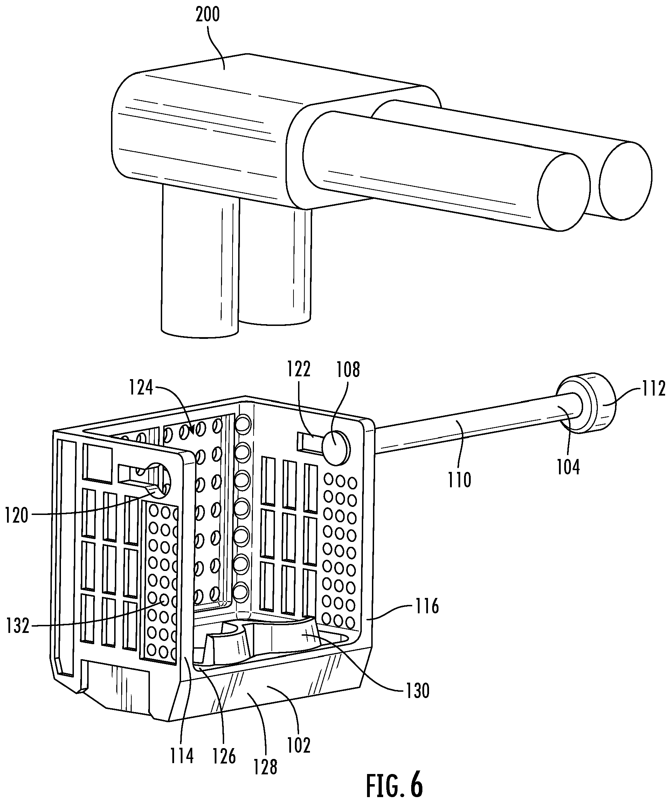

**Figure 4** is an exemplary schematic diagram illustrating the security system (100) for a vehicle connector port (200), such as, but not limited to, a battery electric vehicle (BEV), in which the casing (102) may be engaged with at least one portion of the vehicle connector port (200) while the latch (104) may be in the latched position to inhibit removal of the vehicle connector port (200) from the casing (102) according to one example. Preferably, the security system (100) may be used as a voltage protection for the vehicle connector port (200). Therefore, unauthorized people may be prevented from accessing the vehicle connector port (200), for instance, during maintenance or repair of the vehicle. **Figure 5** is an exemplary schematic diagram illustrating the security system (100) for the vehicle connector port (200) in which the casing (102) may be still engaged with at least one portion of the vehicle connector port (200) while the latch (104) may move to the unlatched position to allow removal of the vehicle connector port (200) from the casing (102) according to one example. **Figure 6** is an exemplary schematic diagram illustrating the security system (100) for the vehicle connector port (200) where the vehicle connector port (200) may be removed out of the casing (102) when the latch (104) may be in the unlatched position. As illustrated in **Figure 4** and **Figure 5****,** the interior (124) may be configured to receive the at least one portion of the vehicle connector port (200), and the at least one socket (130) may be configured to receive and secure the at least one portion of the vehicle connector port (200). Accordingly, access to the vehicle connector port (200) may be inhibited by engagement of the vehicle connector port (200) with the casing (102) and the latch (104) being in the latched position. As illustrated in **Figure 5** and **Figure 6****,** the opening (126) may be configured to allow the vehicle connector port (200) to move into or out of the interior (124) when the latch (104) may be in the unlatched position.

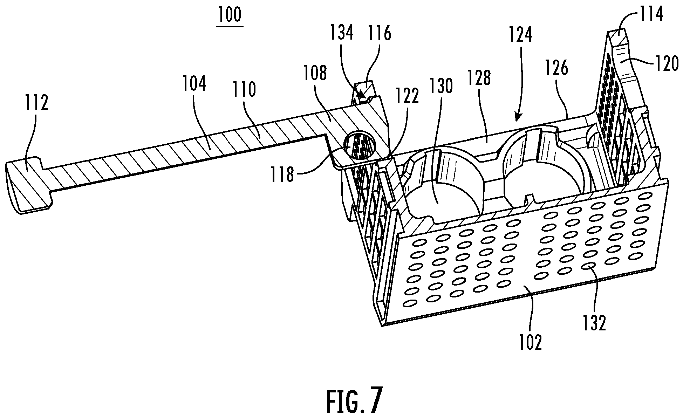

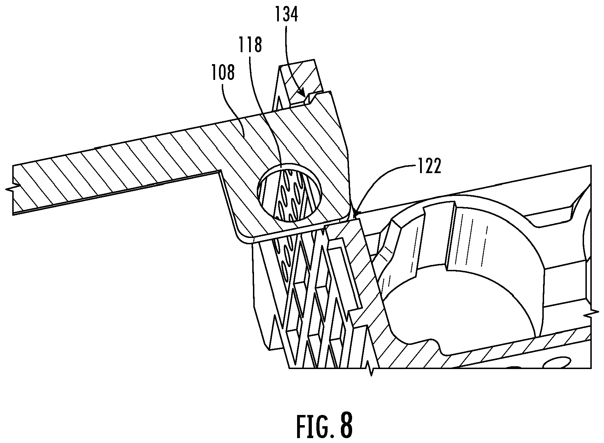

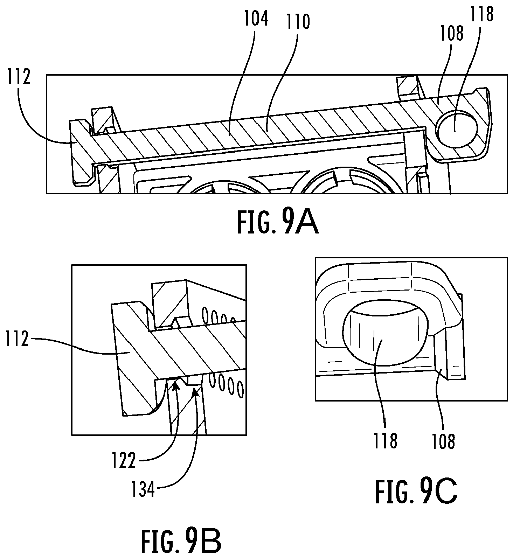

Referring now is made to **Figure 7****,** **Figure 8** and **Figure 9****.** **Figure 7** is a cross-sectional view illustrating the security system (100) in which the latch (104) may be in the unlatched latched position according to one example. **Figure 8** is a partially enlarged view of **Figure 7** illustrating that the latch (104) may be in the unlatched position according to one example. **Figured 9A-9C are** exemplary schematic diagrams illustrating portions of the security system (100) in which the latch (104) may be in the latched position according to one example. As illustrated in **Figure 7****,** **Figure 8** and **Figures 9A****-9C,** the casing (102) further may comprise a recess (134), the recess (134) may be formed in the second through hole (122), the recess (134) may traverse into the second through hole (122) in the second lateral side wall (116) in a direction from the first lateral side wall (114) towards the second lateral side wall (116), the recess (134) may be in spatial communication with the interior (124), a diameter of the recess (134) may be larger than a diameter of a portion of the second through hole (122), and the recess (134) may be configured to removably receive at least a portion of the first terminal head (108) so as to allow an end surface of the first terminal head (108) to substantially lay flush against an inner side of the second lateral side wall (116) when the latch (104) may be in the unlatched latched position. Accordingly, the first terminal head (108) may be configured to entirely move through the first through hole (120) in the first lateral side wall (114), the elongated intermediate rod (110) may be configured to entirely move through the first through hole (120) in the first lateral side wall (114) and the second through hole (122) in the second lateral side wall (116), the second terminal head (112) may be configured to entirely not move through the second through hole (122) in the second lateral side wall (116), and the first terminal head (108) may be configured to partially move through the second through hole (122) in the second lateral side wall (116) while partially stuck insides the recess (134) in the second through hole (122). Therefore, when the latch (104) may be in the unlatched latched position while an end surface of the first terminal head (108) may substantially lay flush against an inner side of the second lateral side wall (116), the vehicle connector port (200) may not be hindered from being removed out of the casing (102), as illustrated in **Figure 5****,** **Figure 6****,** **Figure 7****,** and **Figure 8****.**

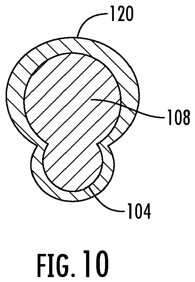

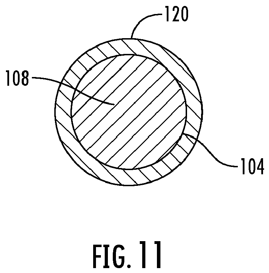

**Figure 10** is a cross-sectional view illustrating that the latch (104) may have a key shape formed by the first terminal head (108) and the elongated intermediate rod (110) while the first through hole (120) may have a keyhole shape. As illustrated in **Figure 10****,** as well as in **Figures 1** **and** **4****-6,** the keyhole shape of the first through hole (120) may match with the key shape of the latch (104). Accordingly, the latch (104) may have "auxiliary-locking" function depending on the orientation of the first terminal head (108) of the latch (104), such that the latch (104) may be restrained in the latched position via the first terminal head (108) cooperating with the second terminal head (112). For example, the first terminal head (108) of the latch (104) is allowed to move through the first through hole (120) only when the first terminal head (108) of the latch (104) rotates from an orientation in which the first terminal head (108) of the latch (104) is not in alignment with the first through hole (120) to another orientation in which the first terminal head (108) of the latch (104) is in alignment with the first through hole (120). **Figure 11** is a cross-sectional view illustrating that the latch (104) may have a barbell shape while the first through hole (120) may have a circle shape. **As illustrated in** **Figure 11****,** the circle shape of the first through hole (120) may match with the barbell shape of the latch (104).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A security system (100), comprising:
a casing (102) configured to engage at least one portion of a vehicle connector port (200); and
a latch (104) movably and undetachably mounted to the casing (102) and configured to selectively move relative to the casing (102) between a latched position to inhibit removal of the vehicle connector port (200) and an unlatched position to allow removal of the vehicle connector port (200).

2. The security system (100) of Claim 1, wherein access to the vehicle connector port (200) is inhibited by engagement of the vehicle connector port (200) with the casing (102).

3. The security system (100) of any of Claims 1-2, further comprising:
a lock (106) that is removably engaged with the latch (104) to selectively lock the latch (104) in the latched position.

4. The security system (100) of Claim 3, wherein the latch (104) comprises an eyelet (118), and wherein the lock (106) is removably engaged with the eyelet (118).

5. The security system (100) of any of Claims 1-4, wherein the latch (104) comprises an elongated intermediate rod (110), a first terminal head (108) at a first end of the elongated intermediate rod (110) and a second terminal head (112) at a second end of the elongate terminal rod (110), wherein the casing (102) comprises a first lateral side wall (114) and a second lateral side wall (116) opposite the first lateral side wall (114), wherein the first terminal head (108) is configured to move through the first lateral side wall (114), and wherein the elongated intermediate rod (110) is configured to move through the first lateral side wall (114) and the second lateral side wall (116).

6. The security system (100) of Claim 5, wherein in the latched position the first terminal head (108) is outside of the first lateral side wall (114), and wherein in the unlatched position the first terminal head (108) is inside of the first lateral side wall (114).

7. The security system (100) of any of Claims 5-6, wherein the casing (102) comprises an interior (124), wherein in the latched position the first terminal head (108) is positioned outside of the interior (124), and wherein in the unlatched position the first terminal head (108) is positioned inside of the interior (124).

8. The security system (100) of any of Claims 5-7, wherein the first terminal head (108), the elongated intermediate rod (110) and the second terminal head (112) are axially aligned.

9. The security system (100) of any of Claims 5-8, wherein the casing (102) further comprises a first through hole (120) defined in the first lateral side wall (114) and a second through hole (122) defined in the second lateral side wall (116), wherein the first terminal head (108) is configured to movably traverse through the first through hole (120), and wherein the first terminal head (108) and the second terminal head (112) are configured to not movably traverse through the second through hole (122).

10. The security system (100) of Claim 9, wherein a diameter of the first terminal head (108) is smaller than a diameter of the first through hole (120) and is larger than a diameter of the second through hole (122), wherein a diameter of the elongated intermediate rod (110) is smaller than the diameter of the first through hole (120) and the diameter of the second through hole (122), and wherein a diameter of the second terminal head (112) is larger than the diameter of the second through hole (122).

11. The security system (100) of any of Claims 9-10, wherein the casing (102) further comprises a recess (134) formed in the second through hole (122), and wherein the recess (134) is configured to allow the first terminal head (108) to lay flush against the second lateral side wall (116).

12. The security system (100) of any of Claims 1-11, wherein the casing (102) comprises an interior (124), and wherein the interior (124) is configured to receive the at least one portion of the vehicle connector port (200).

13. The security system (100) of Claim 12, wherein the casing (102) further comprises an opening (126) that is in spatial communication with the interior (124), and wherein the opening (126) is configured to allow the vehicle connector port (200) to move into or out of the interior (124).

14. The security system (100) of Claim 13, wherein in the latched position the latch (104) extends across the opening (126).

15. The security system (100) of any of Claims 12-14, wherein the casing (102) further comprises a first lateral side wall (114), a second lateral side wall (116) and a third lateral side wall (128), wherein the third lateral side wall (128) is formed between the first lateral side wall (114) and the second lateral side wall (116), and wherein the interior (124) is at least partially defined by the first lateral side wall (114), the second lateral side wall (116) and the third lateral side wall (128).

16. The security system (100) of any of Claims 12-15, wherein the casing (102) further comprises at least one socket (130) within the interior (124) and configured to receive and secure the at least one portion of the vehicle connector port (200).

17. The security system (100) of any of Claims 1-16, wherein the casing (102) comprises a lateral side wall (114, 116, 128) and a plurality of patterned apertures (132) defined therein.

18. The security system (100) of any of Claims 1-17, wherein the casing (102) and the latch (104) are manufactured by a three-dimensional printing process.

19. The security system (100) of any of Claims 1-18, wherein the latch (104) has a key shape or a barbell shape.

20. The security system (100) of Claim 19, wherein the casing (102) comprises a through hole (120), wherein the latch (104) movably traverses through the through hole (120), and wherein the through hole (120) has a keyhole shape matching with the key shape or has a circle shape matching with the barbell shape.
